# EUROPÄISCHE PATENTSCHRIFT

(11) **EP 3 362 310 B1**
(45) Veröffentlichungstag und Bekanntmachung des Hinweises auf die Patenterteilung: **22.02.2023**
(21) Anmeldenummer: 16784162.6
(22) Anmeldetag: 14.10.2016
(51) Int. Cl.: B60K 37/06

(54) **VERFAHREN ZUM AUTOMATISIERTEN FÜHREN EINES MIT EINEM FAHRER BESETZTEN KRAFTFAHRZEUGS UND ZUR INFORMATION DES FAHRERS**
METHOD FOR THE AUTOMATED GUIDING OF A MOTOR VEHICLE OCCUPIED BY A DRIVER AND FOR THE INFORMATION OF THE DRIVER
PROCÉDÉ POUR GUIDER DE MANIÈRE AUTOMATISÉE UN VÉHICULE AUTOMOBILE OCCUPÉ PAR UN CONDUCTEUR ET POUR INFORMER LEDIT CONDUCTEUR

(30) Priorität: 16.10.2015 DE 102015220249
(43) Veröffentlichungstag der Anmeldung: 22.08.2018
(73) Patentinhaber: Continental Automotive Technologies GmbH, 30165 Hannover (DE)
(72) Erfinder: CIELER, Stephan, 60316 Frankfurt (DE); MEIER-ARENDT, Guido, 63225 Langen (DE); VON BYCHOWSKI, Heidi, 61352 Bad Homburg (DE); MATHE, Benjamin, 55118 Mainz (DE)
(74) Vertreter: Continental Corporation
(86) Internationale Anmeldenummer: PCT/EP2016/074724
(87) Internationale Veröffentlichungsnummer: WO 2017/064256

(56) Entgegenhaltungen:
- EP-A2- 2 293 175
- WO-A1-2009/024400
- DE-A1-102008 061 649
- DE-A1-102010 063 792

## Beschreibung

Die Erfindung bezieht sich auf ein Verfahren zum automatisierten Führen eines mit einem Fahrer besetzten Kraftfahrzeugs mittels eines Fahrerassistenzsystems, wobei dem Fahrer fahrtrelevante Informationen des Fahrerassistenzsystems auf einer optischen Anzeigevorrichtung angezeigt werden. Außerdem bezieht sich die Erfindung auf ein Kraftfahrzeug zum Durchführen eines vorgenannten Verfahrens, wobei das Kraftfahrzeug ein Fahrerassistenzsystem zum automatisierten Führen des Kraftfahrzeugs und eine optische Anzeigevorrichtung aufweist.

Es sind bereits verschiedene Verfahren zum automatisierten Führen von mit einem Fahrer besetzten Kraftfahrzeugen mittels eines Fahrerassistenzsystems bekannt. Die Verfahren zum automatisierten Führen des Kraftfahrzeugs werden üblicherweise nach ihrem Automatisierungsgrad unterschieden und gegeneinander abgegrenzt.

Gemäß einer bekannten Abgrenzung der Verfahren gegeneinander übernimmt bei einem Verfahren zum hochautomatisierten Führen eines Kraftfahrzeugs das Fahrerassistenzsystem die Quer- und Längsführung des Kraftfahrzeugs für einen gewissen Zeitraum in spezifischen Situationen. Bei einem Verfahren zum vollautomatisierten Führen eines Kraftfahrzeugs übernimmt das Fahrerassistenzsystem die Quer- und Längsführung des Kraftfahrzeugs vollständig in einem definierten Anwendungsfall. Im Falle des vollautomatisierten Führens fordert das Fahrerassistenzsystem vor dem Verlassen des Anwendungsfalles den Fahrer mit ausreichender Zeitreserve zur Übernahme der Fahraufgabe, also des Führens des Kraftfahrzeugs, auf. Im Falle des hochautomatisierten Führens erfolgt die Übernahmeaufforderung bei Bedarf und mit ausreichender Zeitreserve. Zur Übernahme der Fahraufgabe muss der Fahrer in beiden Fällen, das heißt sowohl beim hochautomatisierten Führen als auch beim vollautomatisierten Führen des Kraftfahrzeugs mittels des Fahrerassistenzsystems, jeweils übernahmebereit sein. Das hoch- oder vollautomatisierte Führen des Kraftfahrzeugs wird auch als Führen des Kraftfahrzeugs mit einer höheren Automatisierungsstufe bezeichnet. In beiden vorgenannten Fällen, dem hochautomatisierten Führen und dem vollautomatisierten Führen des Kraftfahrzeugs, muss der Fahrer das Fahrerassistenzsystem nicht überwachen.

Im Gegensatz dazu muss der Fahrer bei Verfahren mit einer niedrigeren Automatisierungsstufe, nämlich einem Verfahren zum teilautomatisierten Führen des Kraftfahrzeugs mittels eines Fahrerassistenzsystems oder einem Verfahren zum nur assistierten Führen des Kraftfahrzeugs mittels eines Fahrerassistenzsystems, das Fahrerassistenzsystem dauerhaft überwachen. Sowohl beim teilautomatisierten Führen des Kraftfahrzeugs mittels eines Fahrerassistenzsystems als auch beim nur assistierten Führen eines Kraftfahrzeugs mittels eines Fahrerassistenzsystems muss der Fahrer jederzeit zur vollständigen Übernahme der Fahrzeugführung bereit sein.

Nicht nur bei Verfahren zum Führen des Kraftfahrzeugs mit einer niedrigeren Automatisierungsstufe, sondern auch bei Verfahren zum Führen des Kraftfahrzeugs mit einer höheren Automatisierungsstufe kann es wünschenswert sein, dass dem Fahrer fahrtrelevante Informationen zur Verfügung gestellte werden, so dass zum Beispiel ein Vertrauen in die Zuverlässigkeit des Verfahrens beim Fahrer gestärkt werden kann.

Es sind in diesem Zusammenhang bereits verschiedene eingangs genannte Verfahren und Kraftfahrzeuge bekannt. Dabei werden die fahrtrelevanten Informationen auf einer als Bildschirm ausgebildeten Anzeigevorrichtung angezeigt. Abhängig von der Art der dargestellten Information erfolgt die Anzeige mittels verschiedener Bildschirmseiten, die in unterschiedlichen, von der Art der Information abhängigen Anzeigemenüs der Anzeigevorrichtung von einem Bediener, insbesondere dem Fahrer des Kraftfahrzeugs, aus- und angewählt werden können. Ein Wechseln der Art der dargestellten Information erfordert regelmäßig eine Änderung der Auswahl des Anzeigemenüs und dessen gezielte Anwahl durch den Bediener.

Die DE 10 2010 063 792 A1 offenbart beispielsweise ein Verfahren zum automatischen Auswählen von Fahrerassistenzfunktionen in einem Kraftfahrzeug, wobei das Kraftfahrzeug eine Mehrzahl von Fahrerassistenzfunktionen aufweist und jede der Fahrerassistenzfunktionen jeweils entweder einen aktivierten oder einen deaktivierten Zustand annehmen kann.

Die DE 10 2008 061 649 A1 offenbart ein Verfahren zum automatisierten Führen eines mit einem Fahrer besetzten Kraftfahrzeugs mittels eines Fahrerassistenzsystems, wobei dem Fahrer fahrtrelevante Informationen des Fahrerassistenzsystems auf einer optischen Anzeigevorrichtung angezeigt werden.

Die WO 2009024400 A1 beschreibt ein Verfahren mit den Merkmalen des Oberbegriffs des Patentanspruch 1.

Der Erfindung liegt die Aufgabe zugrunde, ein Verfahren der eingangs genannten Art anzugeben, mit welchem eine einfache und übersichtliche Information des Fahrers weiter verbessert wird. Außerdem liegt der Erfindung die Aufgabe zugrunde, ein Kraftfahrzeug zum Durchführen des Verfahrens hervorzubringen.

Die erstgenannte Aufgabe wird erfindungsgemäß dadurch gelöst, dass ein Streckenabschnitt (32) eines Fahrwegfragments (30) besonders gekennzeichnet dargestellt ist und damit wird hervorgehoben wird, dass dieser Streckenabschnitt (32) zum automatisierten Führen des Kraftfahrzeugs geeignet ist und unmittelbar daneben in einem Streckenlängenanzeigebereich (34) die Länge des vorgenannten, zum automatisierten Führen des Kraftfahrzeugs geeigneten Streckenabschnitts (32) angezeigt wird.

Die dem Fahrer angezeigten fahrtrelevanten Informationen umfassen zum Beispiel Informationen zum Straßenverlauf und/oder Informationen zum Verkehrsumfeld des Kraftfahrzeugs und/oder Informationen zum Fahrerzustand. Die Informationen zum Straßenverlauf werden dann beispielsweise mittels einer Anzeigeseite angezeigt, welche Anzeigeseite einer Informationsklasse Straßenkarte zugeordnet ist. Die Informationen zum Verkehrsumfeld werden beispielsweise mittels einer Anzeigeseite angezeigt, welche Anzeigeseite einer Informationsklasse Fahrzeugumfeld zugeordnet ist. Die Informationen zum Fahrerzustand werden beispielsweise mittels einer Anzeigeseite angezeigt, welche Anzeigeseite einer Informationsklasse Fahrer zugeordnet ist. Die jeweils angezeigten fahrtrelevanten Informationen sind in der jeweiligen Anzeigeseite enthalten.

Von besonderem Vorteil ist bei der Erfindung das sequentielle Anzeigen der Anzeigeseiten, wodurch ein zeitaufwendiges und möglicherweise kompliziertes Navigieren über Anzeigemenüs und in Menübäumen vermieden wird. Auch ist mit der Erfindung ein gegebenenfalls umständlicher Zugriff auf verschiedene Anzeigesysteme des Kraftfahrzeugs nicht erforderlich. Dem Benutzer, nämlich dem Fahrer des Kraftfahrzeugs, werden unmittelbar Anzeigeseiten aus verschiedenen Informationsklassen angezeigt, ohne dass der Benutzer beispielsweise eine Menüauswahl oder ein Anzeigemenü wechseln muss.

Durch das sequentielle Anzeigen der Anzeigeseiten in einer festgelegten, das heißt vorgegebenen, Reihenfolge ist es für den Benutzer zudem auch sehr einfach, seine Aufmerksamkeit einer oder mehreren bestimmten Informationsklassen, die für ihn von besonderer Bedeutung sind, zuteilwerden zu lassen.

Das sequentielle Anzeigen der Anzeigeseiten bedeutet ferner, dass nicht mehrere Anzeigeseiten gleichzeitig, beispielsweise in Form von mehreren nebeneinander und/oder überlappend angeordneten Anzeigefenstern, angezeigt werden, sondern dass zu jedem Zeitpunkt immer nur eine einzelne Anzeigeseite angezeigt wird, wodurch sich eine sehr übersichtliche und für den Fahrer leicht zu erfassende Anzeige der fahrtrelevanten Informationen ergibt. Das wird zudem dadurch unterstützt, dass erfindungsgemäß die Anzahl der verschiedenen Anzeigeseiten begrenzt ist. Beispielsweise kann die Anzahl der verschiedenen Anzeigeseiten im Bereich von drei bis zehn Anzeigeseiten liegen, zum Beispiel kann die Anzahl der verschiedenen Anzeigeseiten sechs betragen.

Da dem Fahrer des Kraftfahrzeugs mit Hilfe des erfindungsgemäßen Verfahrens ohne größeren Aufwand für den Fahrer und auf sehr einfache Weise fahrtrelevante Informationen angezeigt und damit zur Verfügung gestellt werden, kann das Vertrauen des Fahrers in das Fahrerassistenzsystem und insbesondere in das automatisierte Führen des Kraftfahrzeug mittels des Fahrerassistenzsystems mit der Erfindung wesentlich erhöht werden. Der Fahrer kann sich zum Beispiel einen Überblick über von einer Umfelderfassungseinrichtung des Kraftfahrzeugs erfassten Umfeldobjekten verschaffen, um sich zu vergewissern, dass eine Fahrzeugregelung und damit auch das automatisierte Führen des Kraftfahrzeugs zuverlässig arbeitet.

Da verschiedenen Informationsklassen zugeordnete Anzeigeseiten in einer festgelegten Reihenfolge hintereinander angeordnet sind, kann der Fahrer auf jeweils für ihn relevante Inhalte intuitiv und gegebenenfalls mit minimalem Bedienaufwand zugreifen. Dabei kann dem Fahrer mit der Erfindung ein schneller Wechsel zwischen einem Anzeigen von zum Beispiel Infotainmentinformationen, Straßenkarteninformationen, Fahrzeugumfeldinformationen sowie Fahrerinformationen ermöglicht werden.

Das sequentielle Anzeigen der Anzeigeseiten kann vorzugsweise fließend erfolgen, das heißt die Übergänge zwischen den Anzeigeseiten können vorzugsweise fließend gestaltet sein. Grundsätzlich ist aber auch ein Wechsel zwischen den Anzeigeseiten beispielsweise in Form eines Umklappens von einer Anzeigeseite auf die nachfolgende Anzeigeseite beim sequentiellen Anzeigen der Anzeigeseiten denkbar.

Die Anzeigevorrichtung kann vorzugsweise einen Bildschirm aufweisen, auf dem die fahrtrelevanten Informationen mittels der Anzeigeseiten angezeigt werden. Die Anzeigeseiten können dann auch als Bildschirmseiten bezeichnet werden.

Zusätzliche vorteilhafte Weiterbildungen der Erfindung sind in den Unteransprüchen angegeben.

Man könnte sich vorstellen, dass die Anzeigeseiten in einem automatischen Ablauf sequentiell angezeigt werden. Gemäß einer vorteilhaften Weiterbildung der Erfindung bewirkt hingegen eine Betätigung eines Eingabeelementes einen Wechsel der auf der Anzeigevorrichtung angezeigten Anzeigeseite zu einer in der Reihenfolge benachbarten Anzeigeseite. Der Wechsel zu der benachbarten Anzeigeseite kann vorzugsweise entweder in einer Vorwärts- oder in einer Rückwärtsrichtung erfolgen, so dass auf jede der beiden einer Anzeigeseite in einer Reihenfolge benachbarten Anzeigeseiten gewechselt werden kann, beispielsweise je nach Betätigung des Eingabeelementes (zum Beispiel bei einem rotatorischen Eingabeelement durch Rechts- oder Linksdrehung des Eingabeelementes). Die Betätigung des Eingabeelementes kann vorteilhaft durch den Fahrer des Kraftfahrzeugs erfolgen und ermöglicht es ihm so, die jeweils gewünschte Information unmittelbar und sehr kurzfristig zu erhalten.

Besonders vorteilhaft für eine Erhöhung des Vertrauens, insbesondere des Fahrers des Kraftfahrzeugs, in eine Zuverlässigkeit des Verfahrens zum automatisierten Führen des Kraftfahrzeugs ist es, wenn gemäß einer anderen vorteilhaften Weiterbildung der Erfindung mittels einer Umfelderfassungseinrichtung des Kraftfahrzeugs ein Umfeldobjekt in einem Verkehrsumfeld des Kraftfahrzeugs erfasst wird und das Umfeldobjekt in einer Anzeigeseite der sequentiell angezeigten Anzeigeseiten auf der Anzeigevorrichtung angezeigt wird.

Gemäß einer anderen vorteilhaften Weiterbildung der Erfindung sind zumindest drei sequentiell angezeigte Anzeigeseiten vorhanden, wobei eine Anzeigeseite der drei Anzeigeseiten einer Informationsklasse Straßenkarte, eine andere Anzeigeseite der drei Anzeigeseiten einer Informationsklasse Fahrzeugumfeld und eine weitere Anzeigeseite der drei Anzeigeseiten einer Informationsklasse Fahrer zugeordnet ist, wobei in der Reihenfolge der Anzeigeseiten zunächst die der Informationsklasse Straßenkarte zugeordnete Anzeigeseite, dann die der Informationsklasse Fahrzeugumfeld zugeordnete Anzeigeseite und dann die der Informationsklasse Fahrer zugeordnete Anzeigeseite angeordnet ist. Die Informationsklasse Straßenkarte kann beispielsweise auch allgemeiner eine Informationsklasse Navigation sein. Die Informationsklasse Fahrzeugumfeld umfasst insbesondere auch das Verkehrsumfeld des Kraftfahrzeugs. Die Informationsklasse Fahrer kann beispielsweise auch spezieller eine Informationsklasse Fahrerzustand oder Fahrergesundheitszustand sein.

Aufgrund der vorgegebenen Reihenfolge der verschiedenen Anzeigeseiten wird der Fahrer des Kraftfahrzeugs vorteilhaft ausgehend von einer fahrtrelevanten Information bezüglich des Fahrwegs (Straßenkarte) über eine fahrtrelevante Information bezüglich des Verkehrsumfelds (Fahrzeugumfeld), beispielsweise eine Information über Umfeldobjekte im Verkehrsumfeld, zu einer fahrtrelevanten Information bezüglich des Fahrers selbst (Fahrer), beispielsweise eine Information über eine Fahrerermüdung und/oder eine Fahrerherzfrequenz, hingeleitet. In der Reihenfolge der Anzeigeseiten wird somit ausgehend von einer vergleichsweise großräumigen Anzeige in den Fahrer hinein gezoomt. In der Reihenfolge müssen die drei genannten Anzeigeseiten nicht unmittelbar aneinander anschließen, sondern es können zwischen den Anzeigeseiten jeweils auch noch eine oder mehrere weitere, beispielsweise einen Detailierungsgrad der angezeigten fahrtrelevanten Informationen erhöhende, Anzeigeseiten angeordnet sein.

Einer anderen vorteilhaften Weiterbildung der Erfindung entsprechend wird mittels einer Fahrerzustandserfassungseinrichtung des Kraftfahrzeugs ein Fahrerzustand des Fahrers erfasst, und der Fahrerzustand wird in einer Anzeigeseite der sequentiell angezeigten Anzeigeseiten auf der Anzeigevorrichtung angezeigt. Damit wird dem Fahrer des Kraftfahrzeugs in einfacher und anschaulicher Weise die Möglichkeit gegeben, ergänzend und in den Ablauf der sequentiellen Anzeige eingebunden eine fahrtrelevante Information über seinen eigenen Zustand, beispielsweise eine Ermüdung, zu erlangen, die zum Beispiel dazu dienen kann zu beurteilen, ob der Fahrer in der Lage ist, das Fahrerassistenzsystem zu überwachen und/oder das Führen des Kraftfahrzeugs von dem Fahrerassistenzsystem zu übernehmen.

Die oben zweitgenannte Aufgabe wird erfindungsgemäß gelöst mit einem Kraftfahrzeug der eingangs genannten Art, wobei das Fahrerassistenzsystem zur Datenübermittlung mit der Anzeigevorrichtung verbunden ist und wobei die Anzeigevorrichtung derart ausgebildet ist, dass sie fahrtrelevante Informationen des Fahrerassistenzsystems mittels einer begrenzten Anzahl von verschiedenen, unterschiedlichen Informationsklassen zugeordneten Anzeigeseiten anzeigt und dass sie die Anzeigeseiten sequentiell und in einer festgelegten Reihenfolge anzeigt.

Die Anzeigevorrichtung kann vorzugsweise einen Bildschirm aufweisen, auf welchem die Anzeigeseiten mit den fahrtrelevanten Informationen angezeigt werden. Die fahrtrelevanten Informationen, die mittels der Anzeigeseiten auf der Anzeigevorrichtung angezeigt werden, werden als Daten von dem Fahrerassistenzsystem zu der Anzeigevorrichtung über eine Verbindung von Fahrerassistenzsystem und Anzeigevorrichtung übermittelt.

Ausführungsbeispiele der Erfindung sind in der Zeichnung dargestellt und werden im Folgenden näher beschrieben. Es zeigen in skizzenhafter und schematisierter Darstellung
- Figur 1: eine erste auf einer Anzeigevorrichtung angezeigte Anzeigeseite,
- Figur 2: eine zweite auf der Anzeigevorrichtung angezeigte Anzeigeseite,
- Figur 3: eine dritte auf der Anzeigevorrichtung angezeigte Anzeigeseite,
- Figur 4: eine vierte auf der Anzeigevorrichtung angezeigte Anzeigeseite,
- Figur 5: eine fünfte auf der Anzeigevorrichtung angezeigte Anzeigeseite,
- Figur 6: eine sechste auf der Anzeigevorrichtung angezeigte Anzeigeseite,
- Figur 7: ein erstes Eingabeelement und
- Figur 8: ein zweites Eingabeelement.

Sich jeweils entsprechende Elemente sind in allen Figuren mit gleichen Bezugszeichen versehen.

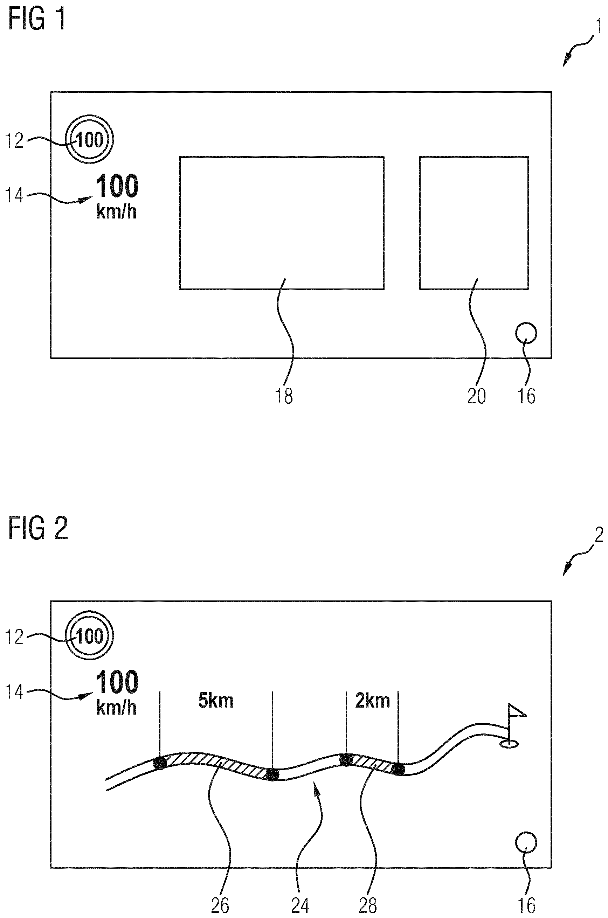

Figuren 1 bis 6 veranschaulichen ein Verfahren zum automatisierten Führen eines mit einem Fahrer besetzten Kraftfahrzeugs mittels eines Fahrerassistenzsystems, wobei dem Fahrer fahrtrelevante Informationen des Fahrerassistenzsystems auf einer optischen Anzeigevorrichtung angezeigt werden. Dazu zeigen Figuren 1 bis 6 eine begrenzte Anzahl von verschiedenen Anzeigeseiten 1, 2, 4, 6, 8, 10, in diesem Ausführungsbeispiel sechs Anzeigeseiten 1, 2, 4, 6, 8, 10, die unterschiedlichen Informationsklassen zugeordnet sind und die dem Fahrer sequentiell und in einer festgelegten Reihenfolge auf der hier nicht weiter dargestellten Anzeigevorrichtung angezeigt werden.

Eine in Figur 1 dargestellte erste Anzeigeseite 1 ist einer Informationsklasse Infotainment zugeordnet. Neben einem Geschwindigkeitssymbol 12 für eine mittels einer Verkehrszeichenerkennungseinrichtung des Kraftfahrzeugs erfassten zulässigen Höchstgeschwindigkeit für einen von dem Kraftfahrzeug momentan befahrenen Streckenabschnitt wird in der ersten Anzeigeseite 1 eine momentane Fahrgeschwindigkeit des Kraftfahrzeugs in einem Geschwindigkeitsanzeigefeld 14 angezeigt. Außerdem wird in einem unten rechts in der Anzeigeseite 1 angeordneten Zustandsanzeigebereich ein Einschaltsymbol 16 dargestellt, welches dem Fahrer signalisiert, dass eine Funktion des automatisierten Führens des Fahrerassistenzsystems aktiviert ist.

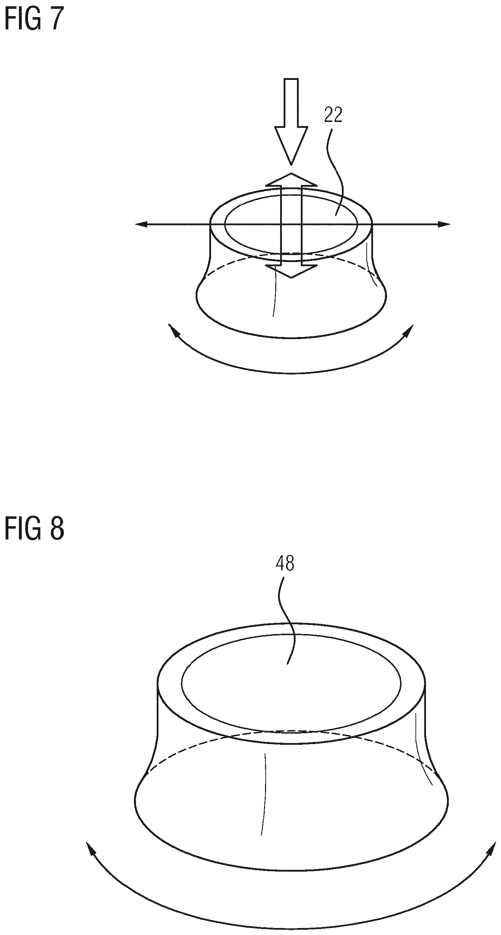

Weiterhin wird in der ersten Anzeigeseite 1 in einem zentralen Bereich ein Auswahlfeld 18 für eine Auswahl und ein Abrufen von Unterhaltungsinhalten (Entertainment) sowie in einem mittig rechten Bereich ein Auswahlfeld 20 für eine Auswahl und ein Abrufen einer Verbindung mit einem Mobilgerät angezeigt. Eine Anwahl der Auswahlfelder 18, 20 sowie die Auswahl und das Abrufen erfolgt mittels eines in Figur 7 vereinfacht dargestellten Eingabeelementes 22. Das Eingabeelement 22 ist ein Dreh-/Drücksteller, der sowohl in Quer- und Längsrichtung als auch in Axialrichtung als auch rotatorisch betätigt werden kann.

Eine in Figur 2 dargestellte zweite Anzeigeseite 2 ist einer Informationsklasse Straßenkarte zugeordnet. Mittels der zweiten Anzeigeseite 2 wird dem Fahrer eine fahrtrelevante Information bezüglich des eigenen Fahrwegs angezeigt: Neben dem Geschwindigkeitssymbol 12, der momentanen Fahrgeschwindigkeit des Kraftfahrzeugs in dem Geschwindigkeitsanzeigefeld 14 sowie dem Einschaltsymbol 16 wird in dieser Anzeigeseite 2 schematisch ein künftiger Routenverlauf 24 für das Kraftfahrzeug in Form eines Liniennetzplans dargestellt.

Der Routenverlauf 24 weist zwei besonders gekennzeichnete, schraffierte Streckenabschnitte 26, 28 auf. Die Länge des ersten Streckenabschnitts 26 dieser beiden Streckenabschnitte 26, 28 beträgt 5 km, die Länge des zweiten Streckenabschnitts 28 beträgt 2 km. Auf diesen schraffierten Streckenabschnitten 26, 28 des Routenverlaufs 24 kann ein automatisiertes Führen des Kraftfahrzeugs erfolgen, das heißt diese Streckenabschnitte 26, 28 sind zum automatisierten Führen des Kraftfahrzeugs geeignet.

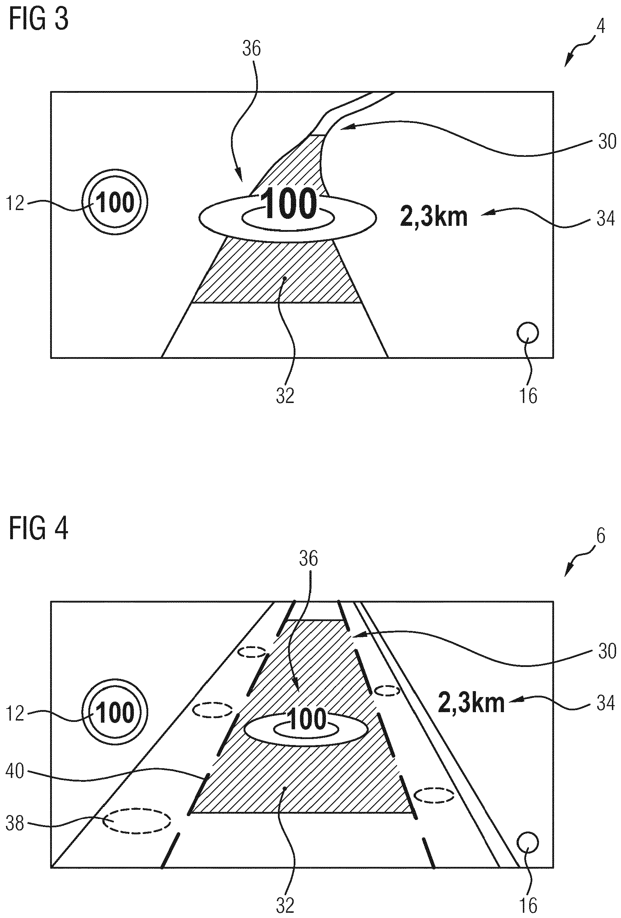

In Figur 3 ist eine dritte Anzeigeseite 4 dargestellt, die wie die zweite Anzeigeseite 2 (siehe Figur 2) der Informationsklasse Straßenkarte zugeordnet ist und mittels welcher dem Fahrer gleichfalls eine fahrtrelevante Information bezüglich des eigenen Fahrwegs angezeigt wird. Jedoch zeigt die dritte Anzeigeseite 4 eine bezogen auf das eigene Kraftfahrzeug fahrzeugnähere Darstellung. Neben dem Geschwindigkeitssymbol 12 und dem Einschaltsymbol 16 wird in der dritten Anzeigeseite 4 zentral ein Fahrwegfragment 30 des momentan von dem Kraftfahrzeug befahrenen Fahrwegs angezeigt.

Ein Streckenabschnitt 32 des Fahrwegfragments 30 ist erfindungsgemäß besonders gekennzeichnet und schraffiert dargestellt. Damit wird hervorgehoben, dass dieser Streckenabschnitt 32 zum automatisierten Führen des Kraftfahrzeugs geeignet ist. Unmittelbar daneben wird erfindungsgemäß in einem Streckenlängenanzeigebereich 34 die Länge des vorgenannten, zum automatisierten Führen des Kraftfahrzeugs geeigneten Streckenabschnitts 32 angezeigt. Weiterhin wird in der dritten Anzeigeseite 4 mittig und auf dem Fahrwegfragment 30 in einem Geschwindigkeitsanzeigebereich 36 die momentane Fahrgeschwindigkeit des Kraftfahrzeugs angezeigt.

Eine in Figur 4 dargestellte vierte Anzeigeseite 6 ist einer Informationsklasse Fahrzeugumfeld zugeordnet. Mittels der vierten Anzeigeseite 6 wird dem Fahrer eine fahrtrelevante Information bezüglich des Verkehrsumfelds des Kraftfahrzeugs angezeigt. Neben dem Geschwindigkeitssymbol 12, dem Einschaltsymbol 16, dem Fahrwegfragment 30, dem besonders gekennzeichneten, zum automatisierten Führen des Kraftfahrzeugs geeigneten Streckenabschnitt 32, dem Streckenlängenanzeigebereich 34 und dem mittigen, auf dem Fahrwegfragment 30 angeordneten Geschwindigkeitsanzeigebereich 36 werden in der vierten Anzeigeseite 6 Umfeldobjekte des Kraftfahrzeugs angezeigt.

Die Umfeldobjekte befinden sich in dem Verkehrsumfeld des Kraftfahrzeugs und werden von einer Umfelderfassungseinrichtung des Kraftfahrzeugs erfasst. In diesem Ausführungsbeispiel werden in der vierten Anzeigeseite 6 Verkehrsteilnehmersymbole 38 für erfasste andere Verkehrsteilnehmer und Fahrbahnmarkierungssymbole 40 für erfasste Fahrbahnmarkierungen angezeigt.

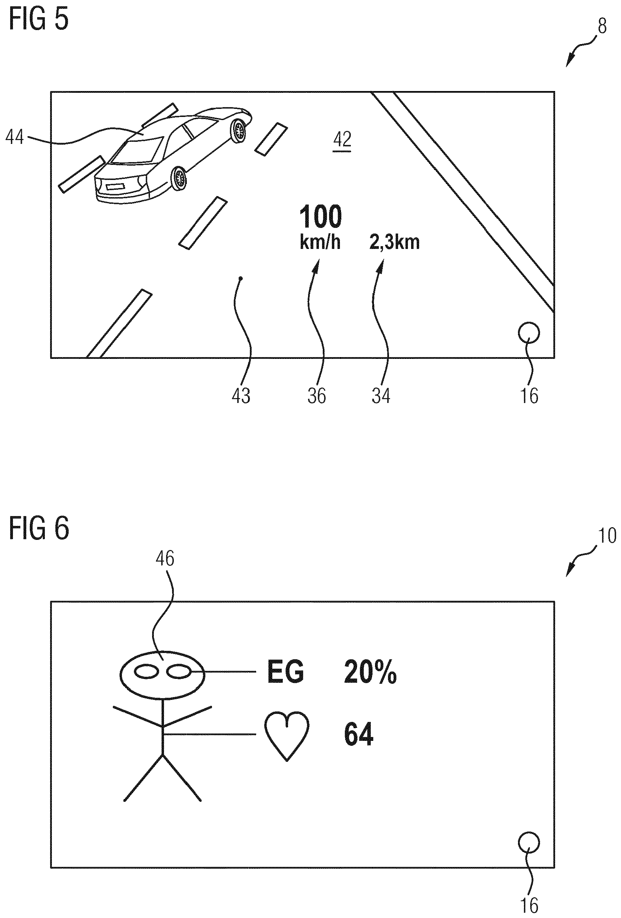

In Figur 5 ist eine fünfte Anzeigeseite 8 dargestellt, die wie die vierte Anzeigeseite 6 (siehe Figur 4) der Informationsklasse Fahrzeugumfeld zugeordnet ist und mittels welcher dem Fahrer ebenfalls eine fahrtrelevante Information bezüglich des Verkehrsumfelds des Kraftfahrzeugs angezeigt wird. Als wesentlicher Unterschied zu der Darstellung in der vierten Anzeigeseite 6 zeigt die fünfte Anzeigeseite 8 eine bezogen auf das eigene Kraftfahrzeug fahrzeugnähere Darstellung, wobei eine weitere Besonderheit darin besteht, dass in der fünften Anzeigeseite 8 ein Kamerabild 42 des Fahrzeugumfelds des Kraftfahrzeugs dargestellt wird.

Das Kamerabild 42 wird von einer Außenraumkamera des Kraftfahrzeugs aufgenommen und weist beispielsweise einen anderen Verkehrsteilnehmer 44 in dem Verkehrsumfeld des Kraftfahrzeugs und eine Straße 43 auf. In das Kamerabild 42 eingeblendet ist in dem Geschwindigkeitsanzeigebereich 36 die momentane Fahrgeschwindigkeit des Kraftfahrzeugs und außerdem in dem Streckenlängenanzeigebereich 34 die Länge des zum automatisierten Führen des Kraftfahrzeugs geeigneten, momentan von dem Kraftfahrzeug befahrenen Streckenabschnitts.

Eine in Figur 6 dargestellte sechste Anzeigeseite 10 ist einer Informationsklasse Fahrer zugeordnet. Mittels der sechsten Anzeigeseite 10 wird dem Fahrer eine fahrtrelevante Information bezüglich des Fahrers selbst angezeigt. In der sechsten Anzeigeseite 10 wird neben dem Einschaltsymbol 16 dazu ein Fahrersymbol 46 angezeigt.

Dem Fahrersymbol 46 zugeordnet wird eine erste Fahrerzustandsinformation EG, die für einen momentanen Ermüdungsgrad des Fahrers steht, und eine zweite, durch ein Herzzeichen symbolisierte Fahrerzustandsinformation, die für eine momentane Herzfrequenz des Fahrers steht, angezeigt. Der angezeigte Ermüdungsgrad des Fahrers beträgt hier 20 %, und die Herzfrequenz beträgt 64 Schläge pro Minute. Mittels einer Fahrerzustandseinrichtung des Kraftfahrzeugs wird ein Fahrerzustand des Fahrers erfasst, und die Fahrerzustandsinformationen geben den Fahrerzustand an.

Die vorgenannten Anzeigeseiten 1, 2, 4, 6, 8, 10 werden sequentiell und in der festgelegten Reihenfolge erste Anzeigeseite 1, zweite Anzeigeseite 2, dritte Anzeigeseite 4, vierte Anzeigeseite 6, fünfte Anzeigeseite 8, sechste Anzeigeseite 10 angezeigt. Nach der sechsten Anzeigeseite 10 folgt eine Fortsetzung bei der ersten Anzeigeseite 1. Die Anzeigeseiten 1, 2, 4, 6, 8, 10 können dabei sowohl in einer Vorwärts- als auch in einer Rückwärtsrichtung durchlaufen werden.

Ein Wechsel der auf der Anzeigevorrichtung momentan angezeigten Anzeigeseite zu einer in der Reihenfolge benachbarten Anzeigeseite erfolgt durch Betätigung eines in Figur 8 vereinfacht dargestellten zweiten Eingabeelementes 48. Das zweite Eingabeelement 48 ist ein Drehsteller, der rotatorisch betätigt werden kann.

Beispielsweise wird, wenn momentan die dritte Anzeigeseite 4 (siehe Figur 3) angezeigt wird, bei Linksdrehung des zweiten Eingabeelementes 48 nachfolgend die zweite Anzeigeseite 2 (siehe Figur 2) angezeigt. Bei Rechtsdrehung des zweiten Eingabeelementes 48 würde hingegen ausgehend von der dritten Anzeigeseite 4 nachfolgend die vierte Anzeigeseite 6 (siehe Figur 4) angezeigt werden.

Ausgehend von der ersten Anzeigeseite 1 (zugeordnet der Informationsklasse Infotainment) über die zweite Anzeigeseite 2 (zugeordnet der Informationsklasse Straßenkarte), die dritte Anzeigeseite 4 (zugeordnet der Informationsklasse Straßenkarte), die vierte Anzeigeseite 6 (zugeordnet der Informationsklasse Fahrzeugumfeld), die fünfte Anzeigeseite 8 (zugeordnet der Informationsklasse Fahrzeugumfeld) und die sechste Anzeigeseite 10 (zugeordnet der Informationsklasse Fahrer) wird von einer vergleichsweise wenige fahrtrelevante Informationen enthaltenden Anzeige über eine vergleichsweise großräumige Anzeige bis in den Fahrer hinein gezoomt (sechste Anzeigeseite 10). Dementsprechend kann die erste Anzeigeseite 1 auch als Zoomstufe 1, die zweite Anzeigeseite 2 als Zoomstufe 2, die dritte Anzeigeseite 4 als Zoomstufe 3, die vierte Anzeigeseite 6 als Zoomstufe 4, die fünfte Anzeigeseite 8 als Zoomstufe 5 und die sechste Anzeigeseite 10 als Zoomstufe 6 bezeichnet werden.

Der Übergang oder Wechsel von einer Anzeigeseite zur nachfolgenden Anzeigeseite bei dem sequentiellen Anzeigen der Anzeigeseiten kann vorzugsweise fließend erfolgen. Die Übergänge zwischen den Zoomstufen können somit fließend gestaltet sein.

Vorzugsweise ist beim automatisierten Führen des Kraftfahrzeugs die dritte Anzeigeseite 4 beziehungsweise Zoomstufe 3 voreingestellt, das heißt diese Anzeigeseite 4 beziehungsweise Zoomstufe 3 wird ohne Betätigung des zweiten Eingabeelements 48 als Standard angezeigt. Für den Fall, dass das Kraftfahrzeug - beispielsweise in einem Streckenabschnitt, der für ein automatisiertes Führen des Kraftfahrzeugs nicht geeignet ist - nicht automatisiert geführt wird, das heißt dass das Kraftfahrzeug in einem manuellen Fahrbetrieb allein von dem Fahrer geführt wird, können die zweite Anzeigeseite 2, die dritte Anzeigeseite 4, die vierte Anzeigeseite 6 und die sechste Anzeigeseite 10 in einem dem vorhergehend beschriebenen Verfahren ähnlichen Verfahren, welches die erste Anzeigeseite 1 und die fünfte Anzeigeseite 8 nicht berücksichtigt, verwendet werden.

## Patentansprüche

1. Verfahren zum automatisierten Führen eines mit einem Fahrer besetzten Kraftfahrzeugs mittels eines Fahrerassistenzsystems, wobei dem Fahrer fahrtrelevante Informationen des Fahrerassistenzsystems auf einer optischen Anzeigevorrichtung angezeigt werden, wobei die fahrtrelevanten Informationen mittels einer begrenzten Anzahl von verschiedenen, unterschiedlichen Informationsklassen zugeordneten Anzeigeseiten (1, 2, 4, 6, 8, 10) auf der Anzeigevorrichtung angezeigt werden, wobei die Anzeigeseiten (1, 2, 4, 6, 8, 10) sequentiell und in einer festgelegten Reihenfolge angezeigt werden, wobei eine Anzeigeseite der Informationsklasse Straßenkarte zugeordnet ist, **dadurch gekennzeich** - **net, dass** ein Streckenabschnitt (32) eines Fahrwegfragments (30) besonders gekennzeichnet dargestellt ist und damit wird hervorgehoben wird, dass dieser Streckenabschnitt (32) zum automatisierten Führen des Kraftfahrzeugs geeignet ist und unmittelbar daneben in einem Streckenlängenanzeigebereich (34) die Länge des vorgenannten, zum automatisierten Führen des Kraftfahrzeugs geeigneten Streckenabschnitts (32) angezeigt wird.

2. Verfahren nach Anspruch 1, **dadurch gekennzeichnet, dass** eine Betätigung eines Eingabeelementes (48) einen Wechsel der auf der Anzeigevorrichtung angezeigten Anzeigeseite (1, 2, 4, 6, 8, 10) zu einer in der Reihenfolge benachbarten Anzeigeseite (1, 2, 4, 6, 8, 10) bewirkt.

3. Verfahren nach Anspruch 1 oder 2, **dadurch ge- kennzeichnet**, dass mittels einer Umfelderfassungseinrichtung des Kraftfahrzeugs ein Umfeldobjekt in einem Verkehrsumfeld des Kraftfahrzeugs erfasst wird und dass das Umfeldobjekt in einer Anzeigeseite (6, 8) der sequentiell angezeigten Anzeigeseiten (1, 2, 4, 6, 8, 10) auf der Anzeigevorrichtung angezeigt wird.

4. Verfahren nach einem der vorhergehenden Ansprüche, **dadurch gekennzeichnet, dass** zumindest drei sequentiell angezeigte Anzeigeseiten vorhanden sind, wobei eine Anzeigeseite (2; 4) der drei Anzeigeseiten einer Informationsklasse Straßenkarte, eine andere Anzeigeseite (6; 8) der drei Anzeigeseiten einer Informationsklasse Fahrzeugumfeld und eine weitere Anzeigeseite (10) der drei Anzeigeseiten einer Informationsklasse Fahrer zugeordnet ist, wobei in der Reihenfolge der Anzeigeseiten zunächst die der Informationsklasse Straßenkarte zugeordnete Anzeigeseite (2; 4), dann die der Informationsklasse Fahrzeugumfeld zugeordnete Anzeigeseite (6; 8) und dann die der Informationsklasse Fahrer zugeordnete Anzeigeseite (10) angeordnet ist.

5. Verfahren nach einem der vorhergehenden Ansprüche, **dadurch gekennzeichnet, dass** mittels einer Fahrerzustandserfassungseinrichtung des Kraftfahrzeugs ein Fahrerzustand des Fahrers erfasst wird und dass der Fahrerzustand in einer Anzeigeseite (10) der sequentiell angezeigten Anzeigeseiten (1, 2, 4, 6, 8, 10) auf der Anzeigevorrichtung angezeigt wird.

6. Kraftfahrzeug zum Durchführen eines Verfahrens nach einem der vorhergehenden Ansprüche, wobei das Kraftfahrzeug ein Fahrerassistenzsystem zum automatisierten Führen des Kraftfahrzeugs und eine optische Anzeigevorrichtung aufweist, wobei das Fahrerassistenzsystem zur Datenübermittlung mit der Anzeigevorrichtung verbunden ist und dass die Anzeigevorrichtung derart ausgebildet ist, dass sie fahrtrelevante Informationen des Fahrerassistenzsystems mittels einer begrenzten Anzahl von verschiedenen, unterschiedlichen Informationsklassen zugeordneten Anzeigeseiten (1, 2, 4, 6, 8, 10) anzeigt und dass sie die Anzeigeseiten (1, 2, 4, 6, 8, 10) sequentiell und in einer festgelegten Reihenfolge anzeigt, wobei eine Anzeigeseite der Informationsklasse Straßenkarte zugeordnet ist, **dadurch gekennzeichnet**, d a s s ein Streckenabschnitt (32) eines Fahrwegfragments (30) besonders gekennzeichnet dargestellt ist und damit wird hervorgehoben wird, dass dieser Streckenabschnitt (32) zum automatisierten Führen des Kraftfahrzeugs geeignet ist und unmittelbar daneben in einem Streckenlängenanzeigebereich (34) die Länge des vorgenannten, zum automatisierten Führen des Kraftfahrzeugs geeigneten Streckenabschnitts (32) angezeigt wird.

## Claims

1. Method for guiding a motor vehicle occupied by a driver in an automated manner by means of a driver assistance system, wherein information relevant to the journey from the driver assistance system is displayed to the driver on an optical display apparatus, wherein the information relevant to the journey is displayed on the display apparatus by means of a limited number of different display pages (1, 2, 4, 6, 8, 10) assigned to different information classes, wherein the display pages (1, 2, 4, 6, 8, 10) are displayed sequentially and in a stipulated order, wherein one display page is assigned to the road map information class, **characterized in that** one route section (32) of a route fragment (30) is represented in a specially indicated manner and it is therefore emphasized that this route section (32) is suitable for guiding the motor vehicle in an automated manner, and the length of the above-mentioned route section (32) suitable for guiding the motor vehicle in an automated manner is displayed directly beside this in a route length display region (34).

2. Method according to Claim 1, **characterized in that** actuation of an input element (48) causes a change from the display page (1, 2, 4, 6, 8, 10) displayed on the display apparatus to an adjacent display page (1, 2, 4, 6, 8, 10) in the order.

3. Method according to Claim 1 or 2, **characterized in that** an environment object in a traffic environment of the motor vehicle is captured by means of an environment capture device of the motor vehicle, and **in that** the environment object is displayed on the display apparatus on a display page (6, 8) of the sequentially displayed display pages (1, 2, 4, 6, 8, 10).

4. Method according to one of the preceding claims, **characterized in that** there are at least three sequentially displayed display pages, wherein one display page (2; 4) of the three display pages is assigned to a road map information class, another display page (6; 8) of the three display pages is assigned to a vehicle environment information class and a further display page (10) of the three display pages is assigned to a driver information class, wherein the display page (2; 4) assigned to the road map information class is arranged first in the order of the display pages, then the display page (6; 8) assigned to the vehicle environment information class and then the display page (10) assigned to the driver information class.

5. Method according to one of the preceding claims, **characterized in that** a driver condition of the driver is captured by means of a driver condition capture device of the motor vehicle, and **in that** the driver condition is displayed on the display apparatus on a display page (10) of the sequentially displayed display pages (1, 2, 4, 6, 8, 10).

6. Motor vehicle for carrying out a method according to one of the preceding claims, wherein the motor vehicle has a driver assistance system for guiding the motor vehicle in an automated manner and an optical display apparatus, wherein the driver assistance system is connected to the display apparatus for the purpose of transmitting data, and the display apparatus is designed in such a manner that it displays information relevant to the journey from the driver assistance system by means of a limited number of different display pages (1, 2, 4, 6, 8, 10) assigned to different information classes, and displays the display pages (1, 2, 4, 6, 8, 10) sequentially and in a stipulated order, wherein one display page is assigned to the road map information class, **characterized in that** one route section (32) of a route fragment (30) is represented in a specially indicated manner and it is therefore emphasized that this route section (32) is suitable for guiding the motor vehicle in an automated manner, and the length of the above-mentioned route section (32) suitable for guiding the motor vehicle in an automated manner is displayed directly beside this in a route length display region (34).

## Revendications

1. Procédé pour la conduite automatisée d'un véhicule automobile occupé par un conducteur au moyen d'un système d'assistance au conducteur, dans lequel des informations concernant le trajet, provenant du système d'assistance au conducteur, sont affichées pour le conducteur sur un dispositif d'affichage optique, dans lequel les informations concernant le trajet sont affichées sur le dispositif d'affichage au moyen d'un nombre limité de diverses pages d'affichage (1, 2, 4, 6, 8, 10) associées à différentes catégories d'information, les pages d'affichage (1, 2, 4, 6, 8, 10) étant affichées de manière séquentielle et dans un ordre déterminé, dans lequel une page d'affichage est associée à la catégorie d'information carte routière,
**caractérisé en ce qu'**un tronçon de route (32) d'un fragment d'itinéraire (30) est représenté en étant spécialement identifié, faisant ainsi ressortir que ce tronçon de route (32) est adapté à la conduite automatisée du véhicule automobile, et la longueur dudit tronçon de route (32) adapté à la conduite automatisée du véhicule automobile est affichée directement à côté, dans une zone d'affichage de longueur de tronçon (34).

2. Procédé selon la revendication 1, **caractérisé en ce qu'**un actionnement d'un élément d'entrée (48) provoque un changement de la page d'affichage (1, 2, 4, 6, 8, 10) affichée sur le dispositif d'affichage à une page d'affichage (1, 2, 4, 6, 8, 10) voisine dans l'ordre.

3. Procédé selon la revendication 1 ou 2, **caractérisé en ce qu'**un objet d'environnement dans un environnement de circulation du véhicule automobile est détecté au moyen d'un dispositif de détection d'environnement, et **en ce que** l'objet d'environnement est affiché sur le dispositif d'affichage sur une page d'affichage (6, 8) des pages d'affichage (1, 2, 4, 6, 8, 10) affichées de manière séquentielle.

4. Procédé selon l'une quelconque des revendications précédentes, **caractérisé en ce qu'**au moins trois pages d'affichage affichées de manière séquentielle sont présentes, dans lequel une page d'affichage (2 ; 4) des trois pages d'affichage est associée à une catégorie d'information carte routière, une autre page d'affichage (6 ; 8) des pages d'affichage est associée à la catégorie d'information environnement de véhicule, et une autre page d'affichage (10) des trois pages d'affichage est associée à une catégorie d'information conducteur, dans lequel, dans l'ordre des pages d'affichage, c'est d'abord la page d'affichage (2 ; 4) associée à la catégorie d'information carte routière qui est affichée, ensuite la page d'affichage (6 ; 8) associée à la catégorie d'information environnement de véhicule est affichée, et ensuite la page d'affichage (10) associée à la catégorie d'information conducteur est affichée.

5. Procédé selon l'une quelconque des revendications précédentes, **caractérisé en ce qu'**un état de conducteur du conducteur est détecté au moyen d'un dispositif de détection d'état de conducteur du véhicule automobile, et **en ce que** l'état de conducteur est affiché sur le dispositif d'affichage sur une page d'affichage (10) des pages d'affichage (1, 2, 4, 6, 8, 10) affichées de manière séquentielle.

6. Véhicule automobile pour exécuter un procédé selon l'une quelconque des revendications précédentes, dans lequel le véhicule automobile présente un système d'assistance au conducteur pour la conduite automatisée du véhicule automobile et un dispositif d'affichage optique, dans lequel le système d'assistance au conducteur est relié au dispositif d'affichage pour la transmission de données, et en ce que le dispositif d'affichage est réalisé de telle sorte qu'il affiche des informations concernant le trajet, provenant du système d'assistance au conducteur, au moyen d'un nombre limité de diverses pages d'affichage (1, 2, 4, 6, 8, 10) associées à différentes catégories d'information, et en ce que les pages d'affichage (1, 2, 4, 6, 8, 10) sont affichées de manière séquentielle et dans un ordre déterminé, dans lequel une page d'affichage est associée à la catégorie d'information carte routière,
**caractérisé en ce qu'**un tronçon de route (32) d'un fragment d'itinéraire (30) est représenté en étant spécialement identifié, faisant ainsi ressortir que ce tronçon de route (32) est adapté à la conduite automatisée du véhicule automobile, et la longueur dudit tronçon de route (32) adapté à la conduite automatisée du véhicule automobile est affichée directement à côté dans une zone d'affichage de longueur de tronçon (34).
